# EUROPÄISCHE PATENTANMELDUNG

(11) **EP 0 646 545 A1**
(43) Veröffentlichungstag der Anmeldung: **05.04.1995**
(21) Anmeldenummer: 94113025.4
(22) Anmeldetag: 20.08.1994
(51) Int. Cl.: C01B 31/36

(54) **Ultrafeines Silicium und Kohlenstoff enthaltendes Pulver**

(30) Priorität: 03.09.1993 DE 4329722
(71) Anmelder: Solvay Deutschland GmbH, D-30173 Hannover (DE)
(72) Erfinder: Weidenbach, Günter, Dr., D-30559 Hannover (DE); Schuhmacher, Manfred, Dr., D-56203 Höhr-Grenzhausen (DE)
(74) Vertreter: Lauer, Dieter, Dr.

(57) **Zusammenfassung**

Die Erfindung betrifft ein ultrafeines Silicium und Kohlenstoff enthaltendes Pulver, das aus kugelförmigen, röntgenamorphen Teilchen besteht, die diamantähnliche Eigenschaften besitzen.

Erfindungsgemäß werden siliciumorganische Verbindungen feinverteilt in einer Reaktionszone 0,5 bis 10 Sekunden einer Temperatur oberhalb 750 °C ausgesetzt.

## Beschreibung

Die Erfindung betrifft ein ultrafeines Pulver, das vor allem Silicium und Kohlenstoff enthält sowie ein Verfahren zu seiner Herstellung.

Aufgrund seines extrem hohen Schmelzpunktes, seiner guten Oxidations- und Temperaturwechselbeständigkeit, seiner hohen Wärmeleitfähigkeit bei kleinen thermischen Ausdehnungskoeffizienten sowie der Tatsache, daß Siliciumcarbid in Säuren und Basen nahezu unlöslich ist, ist Siliciumcarbid Ausgangsmaterial für nichtoxidische Spezialkeramik. Die genannten Eigenschaften eröffnen eine breite Einsatzpalette für gesinterte oder heißgepreßte SiC-Keramiken.

Ein wesentliches Erfordernis für die Entwicklung hochfester Struktur- und Funktionskeramiken ist die Bereitstellung von ultrafeinen, Pulvern mit einer engen kontrollierten Partikelgrößenverteilung.

Siliciumcarbid wird zum großen Teil nach den Acheson-Prozeß hergestellt. Als Rohstoff werden hierbei Quarzsand, Koks, Sägemehl und Kochsalz verwendet. Das Gemisch wird in einem Elektroofen auf ca. 2.300 °C erhitzt. Nach etwa 30 Stunden erhält man ein grobkristallines Siliciumcarbid. An die Synthese schließt sich eine aufwendige mechanisch chemische Aufbereitung und Reinigung des Siliciumcarbids an, bis man das feingemahlene Siliciumcarbidpulver zur Verfügung hat.

Neben diesem konventionellen aufwendigen Verfahren kennt man die sogenannten Dampfphasen-Techniken, in denen die Pulverteilchen aus der Gasphase kondensieren. Solche Reaktionen lassen sich im Plasma, in lasergestützten und CVD-Verfahren sowie in Verfahren unter Benutzung einer Bogenentladung ausführen.

Ziel all dieser Herstellungsverfahren ist die Gewinnung eines sinteraktiven feinen Siliciumcarbidpulvers.

Es ist ebenfalls bekannt, daß aus Polycarbosilanen durch Erhitzen auf 1.300 °C im Vakuum oder unter Inertgas β-SiC in ultrafeiner Korngröße hergestellt werden kann.

Mit diesen Verfahren ist es zwar möglich, hochdisperse Siliciumcarbidpulver herzustellen, jedoch eine phasenreine Darstellung gelingt nicht.

Ziel der Erfindung ist die Bereitstellung eines ultrafeinen Pulvers, das vor allem Silicium und Kohlenstoff enthält, und das aufgrund seiner morphologischen Eigenschaften neue Anwendungsfelder erschließen kann.

Das Ziel der Erfindung wird durch ein ultrafeines Silicium und Kohlenstoff enthaltendes Pulver gelöst, das charakterisiert ist durch kugelförmige röntgenamorphe Teilchen, mit einer Teilchengröße von 0,01 bis 50 µ, vorzugsweise 0,05 bis 20 µ, einem Molverhältnis C zu Si von 1:1 bis 15:1, vorzugweise 3,5:1 bis 8:1 und einer Dichte von 1,2-1,9 g/cm³.

Erfindungsgemäß wird das ultrafeine Silicium und Kohlenstoff enthaltende Pulver hergestellt, indem siliciumorganische Verbindungen in Form von feinteiligen Partikeln fein verteilt für eine Dauer von 0,5 bis 10 Sekunden in einer Reaktionszone einer Temperatur oberhalb 750 °C, vorzugsweise oberhalb 850 °C, ausgesetzt werden. Als siliciumorganische Verbindungen werden vorzugsweise Polycarbosilane auf Basis von Struktureinheiten der allgemeinen Formel I 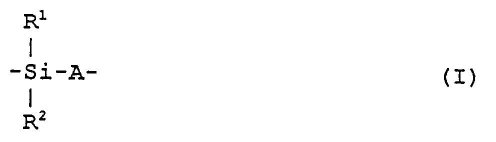
worin
- R¹: für Wasserstoff, Alkyl, Cycloalkyl, Aryl oder Arylalkyl steht, wobei R¹ in verschiedenen Einheiten ein und desselben Polycarbosilans auch unterschiedliche Bedeutung besitzen kann,
- R²: für Alkyl, Cycloalkyl, Aryl oder Arylalkyl steht, wobei R² in verschiedenen Einheiten ein und desselben Polycarbosilans auch unterschiedliche Bedeutung besitzen kann, und
- A: für einen gereadkettigen oder verzweigten Alkylen-Rest oder für einen Cycloalkylen-Rest steht, wobei A in verschiedenen Einheiten ein und desselben Polycarbosilans auch unterschiedliche Bedeutung haben kann,
eingesetzt.

Die Herstellung dieser Polycarbosilane erfolgt wie in der DE-PS 38 41 348 beschrieben. So werden wenigstens ein Dihalogensilan der allgemeinen Formel II 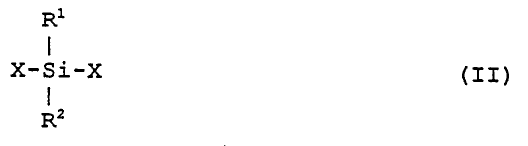
worin
R¹ und R² die obengenannte Bedeutung besitzen und
X für Halogen, vorzugsweise für Chlor oder Brom steht,
mit wenigstens einem Dihalogenkohlenwasserstoff der allgemeinen Formel III

Y-A-Y (III)

worin
A die obengenannte Bedeutung besitzt und Y für die Halogene Chlor, Brom oder Jod, vorzugsweise für Chlor oder Brom, steht, in Gegenwart eines Alkalimetalls umgesetzt.

Gemäß DE 38 41 348 können durch Variation von Art und Anzahl der eingesetzten Reaktanden eine Vielzahl von Polycarbosilanen hergestellt werden, z. B. einheitlich kettenförmige Polycarbosilane, gezielt vernetzte Polycarbosilane, Polycarbosilane mit unterschiedlichem Kondensationsgrad, oder Polycarbosilane mit unterschiedlichen Struktureinheiten.

Die gemäß DE 38 41 348 hergestellten Polycarbosilane können zur Herstellung von ultrafeinen Pulver, das vor allem Silicium und Kohlenstoff enthält, verwendet werden.

Eine bevorzugte Ausführungsform des erfindungsgemäßen Verfahrens ist das Reaktionssprühverfahren. Hierbei werden die siliciumorganischen Partikel als feinteilige Feststoffe, als Suspension, Schmelze oder Emulsion, feinverteilt in die Reaktionszone eingebracht. Das Einbringen der Partikel kann mittels eines Trägergasstromes erfolgen. Als Trägergas kann Inertgas oder Reaktivgas verwendet werden. Vorzugsweise werden die Partikel mit Hilfe von Argon oder einem Argon-Wasserstoff-Gemisch in die Reaktionszone eingetragen. Vorzugsweise enthält das Argon-Wasserstoffgemisch 5 % Wasserstoff.

So können die festen Polycarbosilane in bekannter Weise feinvermahlen direkt in die Reaktionszone eingeblasen werden oder das feinvermahlene Polycarbosilan wird als Suspension oder Emulsion mittels Treibgas in die Reaktionszone gesprüht oder das Polycarbosilan wird zunächst geschmolzen und als Schmelze in die Reaktionszone eingedüst. Das Eindüsen erfolgt vorzugsweise mit einer Zweistoffdüse, in die eine Heizung zur Erwärmung der zu zerstäubenden Masse integriert ist. Die Trägerbzw. Treibgasströme werden bevorzugt so bemessen, daß sich infolge gleicher Strömungsgeschwindigkeiten im Reaktionsraum keine Turbulenzen bilden können.

Die Reaktionszone wird durch übliche technische Maßnahmen von außen beheizt.

In jedem Fall kommt es darauf an, daß die feinverteilten Partikel in kurzer Zeit sehr hoch erhitzt werden. Durch bekannte technische Maßnahmen werden die siliciumorganischen Partikel in kurzer Zeit auf Temperaturen oberhalb 750 °C, vorzugsweise oberhalb 850 °C, erhitzt. Dies wird erreicht durch hohen Energieeintrag, z. B. durch Strahlungswärme und/oder hohe Strömungsgeschwindigkeiten. Durch den dabei stattfindenden Temperatur- bzw. Energieschock bilden sich die erfindungsgemäßen kugelförmigen amorphen Teilchen. Ihr Strukturaufbau entspricht nicht mehr dem des Siliciumcarbid. Es wird, verglichen mit Siliciumcarbid ein bis zu fünfzehnfacher Kohlenstoffgehalt nachgewiesen und die Eigenschaften werden diamantähnlich.

Es wurde gefunden, daß die Partikelgröße durch die Polymerstruktur des eingesetzten Polycarbosilans gesteuert werdon kann, so können z.B. mit Polydiphenylcodimethylcarbosilan als Ausgangsmaterial kleinere Partikel hergestellt werden als mit Polydiphenylcarbosilan als Ausgangsmaterial. In jedem Fall sind die Partikel immer kugelförmig und röntgenamorph.

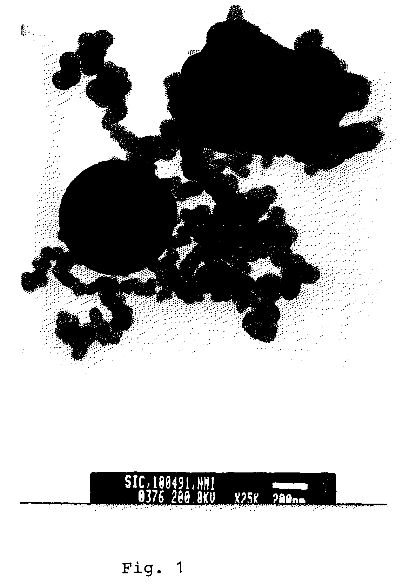

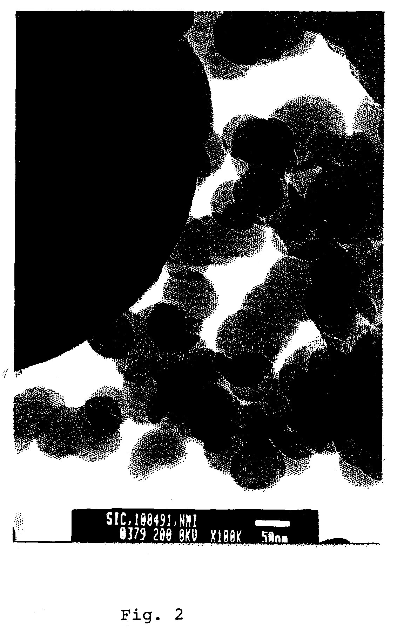

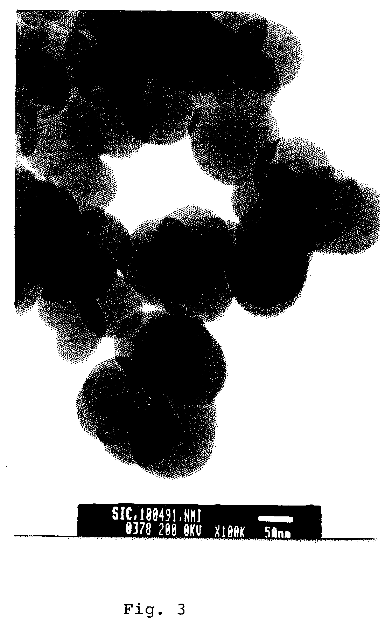

Die Transmissionselektronenmikroskopie zeigt deutlich die kugelförmigen Partikel (Fig. 1 bis 3).
Fig. 1 zeigt die SiC-Partikel im TEM
   Vergrößerung: 25 000-fach
Fig. 2 zeigt die SiC-Partikel im TEM
   Vergrößerung: 100 000-fach
Fig. 3 zeigt die SiC-Partikel im TEM
   Vergrößerung: 100 000-fach
Die Oberfläche wurde mit Hilfe der Quecksilberporosimetrie untersucht. Es zeigte sich, daß die Fläche etwa 20 m²/g beträgt und keine Poren kleiner 500 Å vorliegen. Das Pulver ist somit kugelförmig und kompakt.

Desweiteren wurden die Partikel im Mörser und in der Planetenmühle bearbeitet, es konnten jedoch keine Bruchstellen nachgewiesen werden, was auf eine sehr große Härte schließen läßt.

Es wurde weiterhin gefunden, daß die erfindungsgemäßen ultrafeinen kugelförmigen Pulverpartikel aufgrund ihrer Härte mit herkömmlichen Technologien weder geschliffen noch angeschliffen noch weiter zerkleinert werden können.

## Patentansprüche

1. Ultrafeines Silicium und Kohlenstoff enthaltendes Pulver, gekennzeichnet durch kugelförmige röntgenamorphe Teilchen mit einer Teilchengröße von 0,01 bis 50 µ, einem Molverhältnis C:Si von 1:1 bis 15:1 und einer Dichte von 1,2 bis 1,9 g/cm³.

2. Ultrafeines Silicium und Kohlenstoff enthaltendes Pulver nach Anspruch 1, gekennzeichnet durch eine Teilchengröße von 0,05 bis 20 µ.

3. Ultrafeines Silicium und Kohlenstoff enthaltendes Pulver nach Anspruch 1, gekennzeichnet durch ein Molverhältnis C:Si von 3,5:1 bis 8:1.

4. Verfahren zur Herstellung von ultrafeinem Silicium und Kohlenstoff enthaltenden Pulver gemäß Anspruch 1 bis 3, dadurch gekennzeichnet, daß siliciumorganische Verbindungen feinverteilt in einer Reaktionszone für 0,5 bis 10 Sekunden einer Temperatur oberhalb 750 °C ausgesetzt werden.

5. Verfahren zur Herstellung von ultrafeinem Silicium und Kohlenstoff enthaltenden Pulver nach Anspruch 4, dadurch gekennzeichnet, daß die Siliciumorganische Verbindung als feinteilige Feststoffe, Suspension, Schmelze oder Emulsion feinverteilt in die Reaktionszone eingebracht werden.

6. Verfahren zur Herstellung von ultrafeinem Silicium und Kohlenstoff enthaltenden Pulvern nach Anspruch 4, dadurch gekennzeichnet, daß die siliciumorganische Verbindung mittels eines Trägergasstromes feinverteilt in die Reaktionszone eingebracht wird.

7. Verfahren zur Herstellung von ultrafeinem Silicium und Kohlenstoff enthaltenden Pulvern nach Anspruch 4, dadurch gekennzeichnet, daß als Trägergas ein Inertgas oder ein Reaktivgas verwendet wird, vorzugsweise Argon oder ein Argon-Wasserstoffgemisch.

8. Verfahren zur Herstellung von ultrafeinem Silicium und Kohlenstoff enthaltendem Pulver nach Anspruch 4, dadurch gekennzeichnet, daß die siliciumorganischen Partikel in der Reaktionszone auf Temperaturen oberhalb 850 °C erhitzt werden.

9. Verfahren zur Herstellung von ultrafeinem Silicium und Kohlenstoff enthaltendem Pulver nach Anspruch 4, dadurch gekennzeichnet, daß als siliciumorganische Verbindung Polycarbosilane auf Basis von Struktureinheiten der allgemeinen Formel I 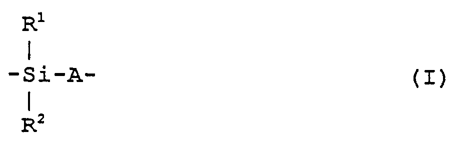 worin
R¹ für Wasserstoff, Alkyl, Cycloalkyl, Aryl oder Arylalkyl steht, wobei R¹ in verschiedenen Einheiten ein und desselben Polycarbosilans auch unterschiedliche Bedeutung besitzen kann,
R² für Alkyl, Cycloalkyl, Aryl oder Arylalkyl steht, wobei R² in verschiedenen Einheiten ein und desselben Polycarbosilans auch unterschiedliche Bedeutung besitzen kann und
A für einen geradkettigen oder verzweigten Alkylenrest oder für einen Cycloalkylenrest steht, wobei A in verschiedenen Einheiten ein und desselben Polycarbosilans auch unterschiedliche Bedeutung besitzen kann
eingesetzt werden.
